# EUROPEAN PATENT APPLICATION

(11) **EP 2 172 511 A1**
(43) Date of publication of application: **07.04.2010**
(21) Application number: 10151441.2
(22) Date of filing: 20.02.2008
(51) Int. Cl.: C08J 5/18, C08L 23/10, C08K 3/00, C08K 3/36

(54) **Polypropylene films having improved optical properties**

(30) Priority: 21.02.2007 EP 07102768
(62) Divisional of application: 08716962.9
(71) Applicant: Borealis Technology Oy, 06101 Porvoo (FI)
(72) Inventor: Wolfschwenger, Johannes, 4491, Niederneukirchen (AT); Ortner, Stefan, 4331, Naarn im Machlande (AT); Niedersüß, Peter, 4312, Ried/Riedmark (AT)
(74) Representative: Lux, Berthold

(57) **Abstract**

The invention relates to polypropylene films having improved optical properties, in particular a reduced orange peel. The films contain polypropylene with an MFR of 3 - 22 g/10 min (230 °C/2.16 kg), a polydispersity (M_{w}/Mₙ) ≤ 7, an XCS content of ≤ 25 wt% and a porous inorganic antiblocking agent.

## Description

The invention relates to polypropylene films having improved optical properties, in particular a reduced orange peel.

For many applications, e.g. packaging films, polypropylene films must have excellent optical properties. The best properties regarding e.g. clarity would be achieved with polypropylene films containing no slip agents and containing no antiblocking agents, because both kinds of additives increase surface roughness. However, for practical purposes and due to processing requirements, polypropylene films very often must contain slip agent as well as antiblocking agent. Antiblocking agents, however, contribute to the so called "orange peel effect", which is an irregular structure within the film, which causes small angle light scattering. "Clarity", which is also called far distance transparency, is influenced by small angle light scattering.

When light is scattered upon transmission through a more or less transparent medium, two different effects may occur:
a) wide angle scattering
   Scattered light is being distributed evenly in all directions. This results in less contrast and a milky haze appearance. Wide angle scattering causes haze.
b) small angle scattering
   The scattered light is deflected in small angles and it is therefore concentrated in a small cone. This has the result, that objects, which are observed through such a transparent medium are distorted and appear to be blurred. Small angle scattering causes a decrease in clarity.

A special feature for distinguishing between small and wide angle scattering is the dependency of the focus of an image upon the observation distance. When an object is observed through a transparent medium which exhibits small angle scattering, the object appears increasingly blurred with increasing distance.

Antiblocking agents are divided into organic and inorganic antiblocking agents. Generally, organic antiblocking agents, e.g. EBS (ethylene-bis-stearamide), do not cause an orange peel effect. They are however not preferred, because they are migrating to the film surface, which results in blooming when the films are stored for a longer period of time. Films containing organic antiblocking agents do also not show the desired level in mechanic properties, e.g. impact strength. Organic antiblocking agents are also susceptible to oxidative degradation (discoloration, odour) and they can cause die lip deposits and smoke development upon extrusion.

For the reasons outlined above it is desirable to find ways of improving the orange peel property of polypropylene films while maintaining their mechanical properties, especially impact strength, without resorting to organic antiblocking agents and the disadvantages associated therewith.

There have been attempts in the prior art to provide polypropylene films showing little orange peel and thus good clarity.

The WO03/95533 discloses polypropylene cast film having little orange peel. The composition for the cast film comprises at least two polypropylene components, with specific high and low propylene contents, specific viscosities and xylene solubles. Such films have however only a very limited application spectrum. The WO03/95533 does also not disclose how a low level of orange peel can be achieved by other means than a very specific polypropylene composition.

It is the object of the present invention to provide a way to make polypropylene film having excellent clarity and good mechanical properties, especially good impact strength, and good processability.

The aforementioned object is achieved by the use of a polypropylene composition containing a porous inorganic compound for producing polypropylene film having an improved orange peel property, where the polypropylene composition contains a polypropylene with an MFR of 3 - 22 g/10 min (230 °C/2.16 kg), a polydispersity (M_{w}/Mₙ) ≤ 7, an XCS content of ≤ 25 wt% and which polypropylene composition contains an antiblocking agent, the antiblocking agent being the porous inorganic compound, where, when the average pore diameter of the porous inorganic compound is between 15 nm and 6 nm, the pore volume is ≤ 0.80 cm³/g and where a polypropylene cast film produced from the polypropylene composition and having a thickness of 50 µm has an improved orange peel property, which is measured as clarity (50 µm/4L) according to ASTM D 1003-00 on 4 stacked layers of the cast film, compared to a polypropylene cast film produced from the polypropylene composition and having a thickness of 50 µm containing a different porous inorganic compound being the antiblocking agent.

According to the present invention, specific porous inorganic compounds are simultaneously used for achieving the antiblocking effect as well as for reducing the orange peel effect. It was surprisingly observed, that certain porous inorganic compounds which have an antiblocking effect and which have the properties as described above, i.e. the required combination of pore volume and average pore diameter, can be used for producing polypropylene films with no or very little orange peel effect. The contribution of the orange peel property of such films to clarity is therefore almost zero or very small, resulting in films having excellent clarity.

The orange peel effect can e.g. be observed by visual inspection of a polypropylene film, by trying to focus through the film at e.g. a picture on a distant wall, e.g. a wall being more than 5 m from the observer. A film which exhibits a pronounced orange peel effect will not easily allow to focus on the picture on the distant wall. The picture will appear blurred. The orange peel effect is also easily observable as irregularities in the film and its surface. For the purpose of the present invention, the orange peel property is measured as clarity (50 µm/4L) according to ASTM D 1003-00, which means that 4 layers of a cast film, having a thickness of 50 µm each are stacked and clarity is measured on that 4-layered stack.

While the inventors do not wish to be bound by the following hypothesis, it is believed that the reason for the effect observed by the specific combinations of pore volume and pore diameter of the inorganic porous compounds, is based on interaction between polymer chains and inorganic particles. It is believed that in the case of very small pore volumes (in cm³/g) the interactions between polymer chains and inorganic particles are few and weak, even if the average pore diameter is in a medium range.
- In the case of large average pore diameters, the interactions between polymer chains and inorganic particles are weak, perhaps because the large pores offer only little possibilities of "friction" between polymer chain and inner particle surface.
- This correlates with the observation, that for very small pore volumes the actual average pore diameter appears to be irrelevant, perhaps because of only little surface area being available for interactions between polymer chains and particle surface. Surprisingly, for medium average pore diameters, i.e. between ca. 6 and ca. 15 nm, a notable orange peel is observed if the pore volume is > 0.80 cm³/g. This is probably a result of the then sufficient number of "medium" sized pores, which offer sufficient interaction between polymer chain and inner particle surface.

When the level of interaction between polymer chains and inorganic particles increases, this appears to cause inhomogeneities in the films which influence rheological properties and crystallisation effects. These inhomogeneities cause the orange peel effect, which is then observable on the film.

The polypropylene which is used according to the present invention has an MFR of 3 - 22 g/10 min (230 °C/2.16 kg), preferably 3 - 19 g/10 min (230 °C/2.16 kg), more preferably 3 - 17 g/10 min (230 °C/2.16 kg), still more preferably 4 - 15 g/10 min (230 °C/2.16 kg), most preferably 5 - 12 g/10 min (230 °C/2.16 kg).

Films which are produced with polypropylene compositions containing polypropylene which is outside of this range, even if the composition contains porous inorganic compounds as they are used according to the present invention, are not satisfactory, because of insufficient optical or mechanical properties or insufficient processability.

Further, the polypropylene which is used according to the invention has a polydispersity (M_{w}/Mₙ) ≤ 7, preferably ≤ 6, more preferably ≤ 5, still more preferably 2 - 5, most preferably 2.5 - 5.

Films which are produced with polypropylene compositions containing polypropylene which is outside of this range, even if the composition contains porous inorganic compounds as they are used according to the present invention, are not satisfactory, because of insufficient optical or mechanical properties, especially, when the molecular weight distribution is too broad.

Further, the polypropylene which is used according to the invention has a XCS content ≤ 25 wt%, preferably ≤ 20 wt%, more preferably ≤ 15, still more preferably 1 - 12 wt%, most preferably 2 - 10 wt%.

Films which are produced with polypropylene compositions containing polypropylene which is outside of this range, even if the composition contains porous inorganic compounds as they are used according to the present invention, are not satisfactory, because of insufficient optical or mechanical properties.

The polypropylene composition which is used in accordance with the present invention to produce films usually contains slip agent, preferably in an amount of 0.01 to 2 wt%, more preferably of 0.03 to 1.5 wt% still more preferably of 0.05 to 1.0 wt%, most preferably of 0.05 to 0.5 wt%. The used slip agents usually are organic compounds, preferably fatty acid amides, such as erucic acid amide and/or oleic acid amide.

Film produced in accordance with the present invention by using a polypropylene composition containing a porous inorganic compound according to the invention has a clarity (50 µm/4L) of ≥ 88 %, preferably ≥ 89 %, more preferably ≥ 90 %, still more preferably ≥ 91 %, most preferably ≥ 92 %.

According to a preferred embodiment of the present invention, the used porous inorganic compound has a pore volume of ≤ 0.80 cm³/g, preferably ≤ 0.50 cm³/g, more preferably ≤ 0.30 cm³/g, still more preferably ≤ 0.10 cm³/g, most preferably ≤ 0.05 cm³/g. This is in accordance with the observation, that for small pore volumes of the inorganic compound the orange peel effect is also small, irrespective of the average pore diameter.

According to an alternatively preferred embodiment, such porous inorganic compounds are used, having an average pore diameter < 6 nm or > 15 nm, which have a pore volume of ≥ 1.30 cm³/g, more preferably of ≥ 1.40 cm³/g, still more preferably of ≥ 1.50 cm³/g, most preferably of ≥ 1.60 cm³/g.

Porous inorganic compounds causing little or no orange peel effect, irrespective of the pore volume, have an average pore diameter of > 15 nm, preferably of > 17 nm, more preferably of > 19 nm, still more preferably of > 20 nm.

Porous inorganic compounds which also cause no or only little orange peel effect, irrespective of the pore volume, have an average pore diameter of < 6 nm, preferably of < 4 nm, more preferably of < 3 nm, still more preferably of < 2 nm.

The porous inorganic compounds which reduce the orange peel effect are simultaneously used as antiblocking agents. Therefore, they are preferably used in a concentration of from 0.01 to 2.0 wt%, preferably of 0.05 to 1.0 wt%, still more preferably of 0.05 to 0.5 wt% based on the weight of the polypropylene composition.

The type of polypropylene is not restricted to a specific one. Homopolymers or copolymers of propene can be used. In case a copolymer is used, the comonomer content, however, is preferred to be less than 10 wt%, otherwise some properties of the film may be less than desired, e.g. mechanical properties like stiffness. The preferred type of polymer for the films of the present invention is a copolymer. The preferred type of copolymer for the films of the present invention is a random copolymer. Preferably, the comonomer is ethylene and/or one or more C₄-C₈ α-olefins. Among possible comonomers, ethylene and 1-butene are preferred.

Suitable polypropylenes are formed by means within the skill in the art, for example, using single site catalysts or Ziegler Natta catalysts. The propylene and optionally ethylene and/or alpha-olefins are polymerised under conditions within the skill in the art, for instance as disclosed by Galli, et al., Angew. Macromol. Chem., Vol. 120., 73 (1984), or by Nello Pasquini (Ed.), et al. in Polypropylene Handbook, Carl Hanser Verlag, Munich, 2005, particularly pages 359 to 380, the disclosures of which are incorporated herein by reference. The type of film for which the polypropylene composition containing the porous inorganic compounds may be used is not restricted to a specific kind. Antiblocking agents are used for all types of polypropylene films, including cast film, blown film and BOPP film (biaxially oriented polypropylene film). Orange peel effects are also observed for all types of film, although they are especially pronounced for cast film. Accordingly, the use of polypropylene compositions, which contain the porous inorganic compound to reducing orange peel effects and as antiblocking agents in polypropylene film is preferred for cast film.

The production of film, especially of oriented, in particular biaxially oriented film, and unoriented film, in particular cast film, is generally known in the art. It is also explained in great detail in Edward P. Moore, Jr., Polypropylene Handbook, Hanser Publishers, 1996, 325-332.

According to a preferred embodiment of the invention, the porous inorganic compound is selected from any one or mixtures of natural silica, synthetic silica and synthetic zeolites.

Preferably, the porous inorganic compound is selected from synthetic amorphous silica and/or sodium calcium aluminosilicate hydrate (a synthetic zeolite).

It is a further object of the present invention to provide a polypropylene composition which is useful for producing polypropylene film having excellent clarity and good mechanical properties, especially good impact strength, and good processability.

The aforementioned object is achieved by a polypropylene composition containing a polypropylene with an MFR of 3 - 22 g/10 min (230 °C/2.16 kg), a polydispersity (M_{w}/Mₙ) ≤ 7, an XCS content of ≤ 25 wt% and which polypropylene composition contains an antiblocking agent, the antiblocking agent being a porous inorganic compound, where, when the average pore diameter of the porous inorganic compound is between 15 nm and 6 nm, the pore volume is ≤ 0.80 cm³/g.

It is a still further the object of this invention to provide a polypropylene film having excellent clarity and good mechanical properties, especially good impact strength, and good processability.

This object was achieved by a polypropylene film which comprises a polypropylene composition, which contains a polypropylene with an MFR of 3 - 22 g/10 min (230 °C/2.16 kg), a polydispersity (M₂/Mₙ) ≤ 7, an XCS content of ≤ 25 wt% and which polypropylene composition contains an antiblocking agent, the antiblocking agent being a porous inorganic compound, where a polypropylene cast film produced from the polypropylene composition and having a thickness of 50 µm has an orange peel property, which is measured as clarity (50 µm/4L) according to ASTM D 1003-00 on 4 stacked layers of the cast film, the clarity (50 µm/4L) being ≥ 88 %.

Surprisingly, the films of the present invention open up application areas for which polypropylene films could not be used before. These areas include high clarity applications like highly clear display film, wrap film or stationery film.

### Measurement Methods

### MFR

The melt flow rates were measured with a load of 2.16 kg at 230 °C. The melt flow rate is that quantity of polymer in grams which the test apparatus standardised to ISO 1133 extrudes within 10 minutes at a temperature of 230 °C under a load of 2.16 kg.

### Comonomer contents

Comonomer contents (ethylene) were measured with Fourier transform infrared spectroscopy (FTIR) calibrated with ¹³C-NMR.

### Gloss

Gloss was determined according to DIN 67530 on cast films having a thickness of 50 µm at an angle of 20°.

### Clarity

According to ASTM D 1003-00, haze is defined as the percentage of transmitted light, which deviates from the incident light beam by more than 2.5°.

Clarity was determined according to ASTM D 1003-00 on cast films having a thickness of 50 µm. For the measurements, four adjacent layers of film were used. Only light, which deviates from the incident light beam by less than 2.5° was measured.

Clarity was measured with a *haze-gard plus* from BYK-Gardner GmbH, Germany

Polydispersity **(M_{w}/Mₙ) :** The determination of weight average molecular weight (M_{w}) and number average molecular weight (Mₙ) and the polydispersity = (M_{w}/Mₙ) by size exclusion chromatograhy (SEC): M_{w}, Mₙ and (M_{w}/Mₙ) were determined with a Millipore Waters ALC/GPC operating at 135 °C and equipped with two mixed beds and one 107 A TSK-Gel columns (TOSOHAAS 16S) and a differential refractometer detector. The solvent 1,2,4-trichlorobezene was applied at flow rate of 1 ml/min. The columns were calibrated with narrow molecular weight distribution polystyrene standards and narrow and broad polypropylenes. Reference is also made to ISO 16014.

### Pore Volume, Specific Surface, Pore Diameter

Specific Surface and Pore Volume were determined with Nitrogen physisorption. Measurements were performed with a Sorptomatic 1990 from Thermo Finnigan., which is equipped with a two-stage rotary vane pump as first pump and a turbomolecular pump for producing a high vacuum. For pressure measurements a 0-1000 Torr Baratron pressure transducer was used for dosage pressure and adsorption pressure and a 0-10 Torr Baratron pressure transducer was used for the low pressure range of the adsorption isotherm. For each measuring point the saturation vapour pressure was determined by measuring the temperature of liquid nitrogen with a Pt100 temperature sensor.

Each sample was evacuated for 5 hours at 150 °C and a pressure < 10⁻³ mbar in the sample heater of the measurement device. After measurement of the N₂ sorption isotherm at 77 K the dead volume of the measurement apparatus was determined with Helium at 77 K. Calculations were performed with Advanced Data Processing 4.0 and gave the results which are shown in table 2.

Medium pore diameter was determined according to DIN 66134, according to a method of Barret, Joyna and Halenda.

### Dart Drop Test

Damaging Force (Fₛ/d), Penetration Energy (Wₛ/d) and total Penetration Energy (Wₜₒₜ/d) were determined with a Dart Drop Test according to DIN 553 443 part 2 on cast films having a thickness of 50 µm.

### Examples

The following samples were prepared:

**Table 1**

| no. | polymer | antiblocking agent | MFR (230°C/2.16kg) [g/10min] | gloss (50µ) | clarity (50µ/4L) | Dart drop test | | |
|---|---|---|---|---|---|---|---|---|
| | | | | | | Fₛ/d [N/mm] | Wₛ/d [J/mm] | Wₜₒₜ/d [J/mm] |
| | | | | | | | | |
| E1 | P1 | AB 1 | 8.5 | 145 | 96.3 | 1207 | 32.9 | 33.7 |
| E2 | P1 | AB 2 | 7.2 | 143 | 94.7 | 1148 | 30.2 | 30.8 |
| E3 | P1 | AB 3 | 7.1 | 142 | 92.6 | 1229 | 39.7 | 40.3 |
| | | | | | | | | |
| CE1 | P1 | AB 4 | 7.8 | 128 | 87.9 | 991 | 20.4 | 21.0 |
| CE2 | P1 | AB 5 | 7.5 | 127 | 87.0 | 1041 | 20.6 | 23.6 |
| CE3 | P1 | EBS | 8.6 | 154 | 99.7 | 1056 | 21.5 | 22.8 |
| CE4 | P1 | no AB | 7.7 | 153 | 99.7 | 1251 | 40.9 | 41.7 |
| CE5 | P2 | AB1 | 1.7 | 105 | 83.9 | 1080 | 18.9 | 19.9 |
| CE6 | P3 | AB1 | 26.0 | 150 | 96.2 | 967 | 13.5 | 14.9 |
| CE7 | P4 | AB1 | 7.3 | 56 | 81.0 | 447 | 0.7 | 0.7 |
| CE8 | P5 | AB1 | 6.4 | 69 | 72.4 | 1035 | 35.8 | 36.6 |

The polymer P1 used in the above samples was a propylene random copolymer having an ethylene content of 3.5 wt%, a M_{w}/Mₙ of 3.9, an XCS of 8.5 wt% and an MFR of 8 g/10 min. P2 : propylene random copolymer having an ethylene content of 3.5 wt%, a M_{w}/Mₙ of 5.0, an XCS of 7.5 wt% and an MFR of 1.9 g/10 min.

P3 : propylene random copolymer having an ethylene content of 3.5 wt%, a M_{w}/Mₙ of 3.2, an XCS of 9 wt% and an MFR of 26 g/10 min.

P4 : propylene homopolymer having a polydispersity (M_{w}/Mₙ) of 7.8, an XCS of 1 wt% and an MFR of 6.5 g/10 min.

P5 : heterophasic propylene ethylene copolymer having an ethylene content of 15 wt%, an XCS of 30 wt% and an MFR of 7.5 g/10 min.

The polymers were mixed with 0.08 wt% erucic acid amide (EA), 0.15 wt% Irganox B215, 0.1 wt% Ca-Stearate and the respective antiblocking agent and were granulated. All samples which contained antiblocking agent contained 0.2 wt% of antiblocking agent.

Cast films were produced from these compositions on a single screw extruder with a barrel diameter of 52 mm and a slot die of 800 x 0.5 mm in combination with a chill- and a takeup-roll. Melt temperature was 240 °C in the die; the chill-roll was kept at 15 °C and the takeup roll at 20 °C. A film thickness of 50 µm, respectively, was adjusted through the ratio between extruder output and takeoff speed.

The following inorganic compounds, which are available as antiblocking agents, were used:

**Table 2**

| compound | commercial name | specific surface (BET) [m²/g] | pore volume [cm³/g] / p/p₀ | avg. pore diameter [nm] |
|---|---|---|---|---|
| | | | | |
| AB 1 | Sylobloc K500 | 268,8 | 1,683 / 0,98 | 21,7 |
| AB 2 | Silton JC-30 | 7,9 | 0,014 / 0,94 | 9,0 |
| AB 3 | Silton JC-50 | 1,91 | 0,005 / 0,94 | 1,0 |
| | | | | |
| AB 4 | Gasil AB 725 | 359,4 | 1,166 / 0,98 | 12,3 |
| AB 5 | Sylobloc 45 | 484,0 | 0,860 / 0,95 | 6,9 |
| | | | | |

Sylobloc 45 and Sylobloc K 500 are synthetic amorphous silica, commercially available from Grace Davison, Germany.

Gasil AB 725 is a synthetic amorphous silica, commercially available from Ineos Silicas, Great Britain.

Silton JC-30 and Silton JC-50 are synthetic zeolites, commercially available from Mizusawa Ind. Chem., Japan. Chemically, they are sodium calcium aluminosilicate, hydrate.

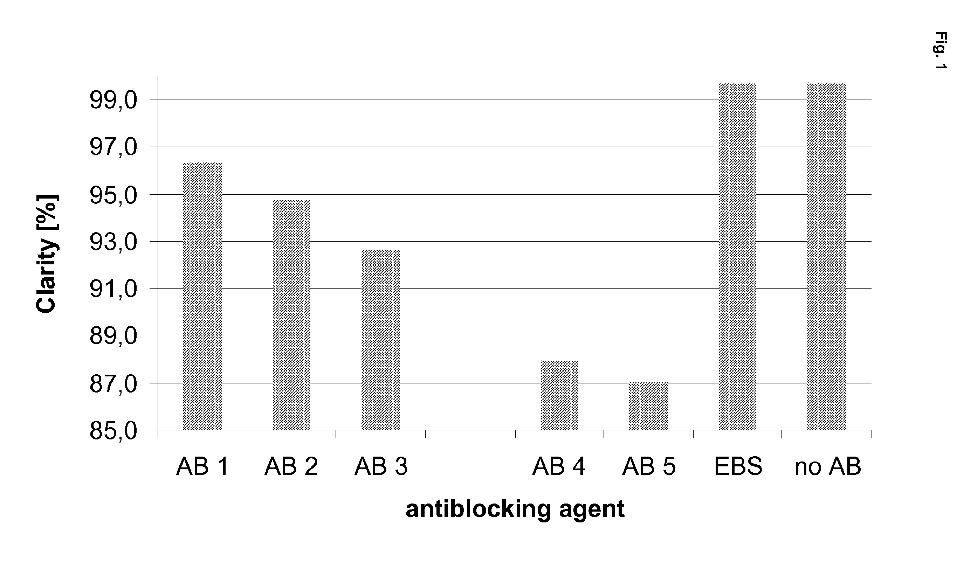

The effect of the invention is shown in Fig. 1. Those inorganic compounds which either have a very small pore volume or a combination of very large pore volume and large pore diameter have the effect that the clarity of the produced cast films was remarkably improved compared to inorganic compounds which do not fulfill these parameters. The films with best clarity were those containing EBS or no inorganic compound at all. CE3 is however insufficient in its impact strength, see Penetration Energy (Wₛ/d) and total Penetration Energy (Wₜₒₜ/d) from the dart drop test in Table 1. CE4 cannot be processed under commercial conditions, because it does not contain any antiblocking agent.

Table 1 further shows the importance of choosing a suitable propylene polymer. In CE5 the polymer P2 has a too low MFR, resulting in very unsatisfactory gloss and poor impact strength.

In CE6 the polymer P3 has a too high MFR, resulting in very poor impact strength.

In CE7 the polymer P4 has a too high M_{w}/Mₙ, resulting in very inferior mechanical and optical properties.

In CE8 the polymer P5 has a too high XCS content, resulting in unsatisfactory gloss and clarity.

## Claims

1. Polypropylene film, wherein the polypropylene film comprises a polypropylene composition, which contains a polypropylene with an MFR of 3 - 22 g/10 min (230 °C/2.16 kg), a polydispersity (M_{w}/Mₙ) ≤ 7, an XCS content of ≤ 25 wt% and which polypropylene composition contains an antiblocking agent, the antiblocking agent being a porous inorganic compound, where a polypropylene cast film produced from the polypropylene composition and having a thickness of 50 µm has an orange peel property, which is measured as clarity (50 µm/4L) according to ASTM D 1003-00 on 4 stacked layers of the cast film, the clarity (50 µm/4L) being ≥ 88 %.

2. Use according to claim 1, **characterised in that** the clarity (50 µm/4L) of the polypropylene film is ≥ 88%.

3. Use according to claim 1 or 2, **characterised in that** the porous inorganic compound has a pore volume ≤ 0.5 cm³/g.

4. Use according to claim 1 or 2, **characterised in that** the porous inorganic compound has a pore volume ≥ 1.3 cm³/g.

5. Use according to one of claims 1 to 4, **characterised in that** the porous inorganic compound is used in a concentration of from 0.01 to 2.0 wt%, preferably of 0.05 to 1.0 wt% based on the weight of the polypropylene composition.

6. Use according to one of claims 1 to 5, **characterised in that** the polypropylene is a propylene homopolymer or a propylene copolymer containing up to 10 wt% of comonomer.

7. Use according to one of claims 1 to 6, **characterised in that** the polypropylene film is a cast film.

8. Use according to one of claims 1 to 7, **characterised in that** the porous inorganic compound is selected from any one or mixtures of natural silica, synthetic silica and synthetic zeolites.

9. Use according to claim 8, **characterised in that** the porous inorganic compound is selected from synthetic amorphous silica and/or sodium calcium aluminosilicate hydrate.

10. Polypropylene composition for producing polypropylene film, wherein the polypropylene composition contains a polypropylene with an MFR of 3 - 22 g/10 min (230 °C/2.16 kg), a polydispersity (M_{w}/Mₙ) ≤ 7, an XCS content of ≤ 25 wt% and which polypropylene composition contains an antiblocking agent, the antiblocking agent being a porous inorganic compound, where, when the average pore diameter of the porous inorganic compound is between 15 nm and 6 nm, the pore volume is ≤ 0.80 cm³/g.

11. Polypropylene film, wherein the polypropylene film comprises a polypropylene composition, which contains a polypropylene with an MFR of 3 - 22 g/10 min (230 °C/2.16 kg), a polydispersity (M_{w}/Mₙ) ≤ 7, an XCS content of ≤ 25 wt% and which polypropylene composition contains an antiblocking agent, the antiblocking agent being a porous inorganic compound, where a polypropylene cast film produced from the polypropylene composition and having a thickness of 50 µm has an orange peel property, which is measured as clarity (50 µm/4L) according to ASTM D 1003-00 on 4 stacked layers of the cast film, the clarity (50 µm/4L) being ≥ 88 %.
